Europäisches Patentamt

(19) European Patent Office

Office européen des brevets

(11) Numéro de publication : **0 362 024 B1**

(12) # FASCICULE DE BREVET EUROPEEN

(45) Date de publication du fascicule du brevet :
29.05.91 Bulletin 91/22

(51) Int. Cl.⁵ : **A01J 25/16**

(21) Numéro de dépôt : 89402574.1

(22) Date de dépôt : 20.09.89

(54) **Dispositif pour l'affinage des fromages.**

(30) Priorité : 27.09.88 FR 8812583

(43) Date de publication de la demande :
04.04.90 Bulletin 90/14

(45) Mention de la délivrance du brevet :
29.05.91 Bulletin 91/22

(84) Etats contractants désignés :
DE GB NL

(56) Documents cités :
FR-A- 2 366 791
ZUIVELBEREIDING EN VEETEELT. vol. 16, no.
20, septembre 1983, DOETINCHEM NL page 91
"Kunstof wielen voor rollende containers"

(73) Titulaire : Union des Coopératives Laitières
d'ISIGNY-SUR-MER et de
SAINTE-MERE-EGLISE (Union de
Coopératives Agricoles)
2, rue du Docteur Boutrois
F-14230 Isigny-sur-Mer (FR)

(72) Inventeur : Chincholle, Roger Léon Joseph
2 rue du Docteur-Boutrois
F-14230 Isigny-sur-Mer (FR)
Inventeur : Delahaye, Daniel André Emile
2 rue du Docteur-Boutrois
F-14230 Isigny-sur-Mer (FR)
Inventeur : Koning, Jean
2 rue du Docteur-Boutrois
F-14230 Isigny-sur-Mer (FR)

(74) Mandataire : Colas, Jean-Pierre et al
Cabinet de Boisse 37, avenue Franklin D.
Roosevelt
F-75008 Paris (FR)

## Description

Comme on le sait, pour l'affinage des fromages, ceux-ci sont mis au repos sur des planches horizontales au cours d'une durée qui peut atteindre 18 mois.

Pour que les fromages conservent leur forme pendant cette durée et pour obtenir une croûte régulière, en évitant l'échauffement de la partie du fromage qui est en contact avec le support, il est nécessaire de retourner régulièrement les fromages, ce qui entraîne des frais de manutention.

Pour éviter ces frais on a déjà proposé (voir FR-A-2 366 791) de faire reposer les fromages pendant la période d'affinage et de stockage, sur des filets en matière plastique, qui ont la forme de poches supportées par des plaques entourant l'ouverture de chaque poche. La forme initiale des fromages est ainsi conservée. De plus l'air peut circuler librement tout autour des fromages. Le préambule de la revendication 1 est basé sur cet état de la technique.

Le dispositif connu n'est cependant pas sans présenter des inconvénients.

Il nécessite des filets d'une structure spéciale. De plus, intentionnellement réalisé en forme de poche profonde, il gêne la manutention des fromages, notamment lors de leur enlèvement. Il se prête mal à une surveillance permanente en rendant peu visibles les fromages en cours d'affinage, alors que dans un hâloir d'une certaine importance il n'est pas rare d'avoir un nombre de fromages de l'ordre de 100.000. Il rend difficile le balayage mécanique ou à l'air comprimé auquel il faut périodiquement recourir pour faire tomber les acariens qui attaquent la croûte.

L'invention a pour but d'éliminer ces inconvénients.

Ce but est atteint par un dispositif selon la revendication 1.

Le dispositif qui fait l'objet de 'invention se compose d'une ossature en forme d'échelle dont les barreaux sont écartés d'une distance au moins égale à la grande dimension de chaque fromage et qui supportent un filet sur lequel les fromages viennent reposer, ce filet étant constitué par une gaine dans laquelle l'ossature est enfilée.

Plusieurs supports ainsi constitués peuvent être placés les uns au-dessus des autres comme des rayonnages sur des barres horizontales portées par des montants.

De cet agencement très simple découlent plusieurs avantages.

Tout d'abord il est facile de séparer le filet et l'ossature quand on veut procéder à un nettoyage, voire de changer le filet, s'il est détérioré. Comme filet on peut utiliser le genre à larges mailles employé dans le commerce pour emballer des légumes tels que carottes et pommes de terre. Dans de tels filets non seulement le contenu est bien aéré, mais aussi il est bien visible et accessible à la surveillance, d'autant plus que la constitution par gaine coiffant une ossature plate fait que les fromages, supportés par déformation et tension de la gaine, ne sont pas profondément encastrés dans celle-ci. Il en résulte aussi que les fromages peuvent être facilement balayés mécaniquement ou par jet pour chasser les acariens quand ils attaquent trop fortement la croûte.

La description qui va suivre en regard du dessin annexé, donné à titre d'exemple non limitatif, fera bien comprendre comment l'invention peut être réalisée, les particularités qui ressortent tant du dessin que du texte faisant, bien entendu, partie de ladite invention.

La figure 1 montre en projection horizontale un support en forme d'échelle.

La figure 2 est une vue en perspective de ce support et du filet qui lui est associé.

La figure 3 montre en élévation le dispositif complet comportant des montants et des supports étagés.

La figure 4 montre le dispositif en projection verticale sur un plan perpendiculaire à celui de la figure 3.

La figure 5 est une vue de détail à plus grande échelle et en coupe montrant les fromages en place sur un filet.

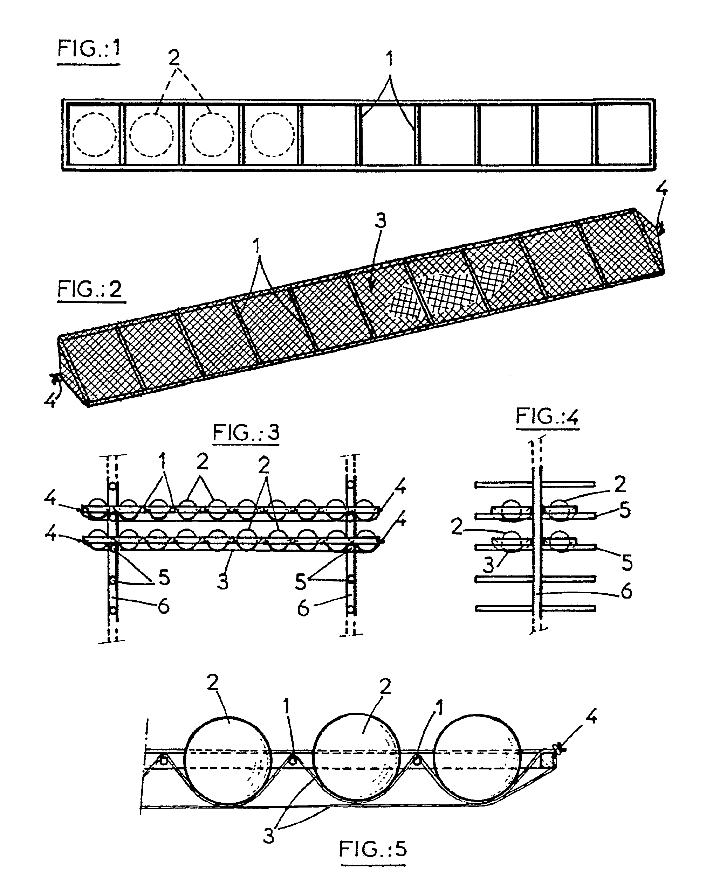

On voit sur la figure 1 un support destiné à remplacer la planche habituelle. Ce support est constitué par une ossature rigide en forme d'échelle, dont les barreaux 1 ont entre eux des intervalles supérieurs à la grande dimension d'un fromage 2 dont le contour est tracé en pointillés sur la figure 1. Ce support est surmonté d'un filet 3 en matière souple imputrescible, par exemple en matière plastique et qui est largement ajouré. Ce peut être, par exemple, un filet à mailles carrées d'environ 1 cm de côté. Pour associer le filet à l'ossature en échelle, on constitue avec le filet une sorte de gaine dans laquelle on enfile l'ossature. Cette réalisation est représentée sur la figure 2 où l'on voit aux extrémités les noeuds ou coutures 4 qui ferment la gaine.

Plusieurs planches en échelle ainsi constituées peuvent être disposées avec de larges intervalles sur des barreaux horizontaux 5 de montants 6, en forme de mâts de perroquet. Avec des barreaux 5 assez longs, plusieurs échelles peuvent être juxtaposées sur un même barreau.

Comme on le comprend par l'examen de la figure 5 ce dispositif conserve la forme donnée au fromage lors de son moulage initial, du fait que le poids du fromage, qui ne touche pas les parties rigides du support, est supporté par une surface importante du filet, lequel vient épouser la forme du fromage en se courbant et se tendant.

On obtient ainsi les divers avantages qui ont été indiqués.

Il va de soi que le terme "filet" comprend toute autre forme d'organe ajouré souple pouvant servir de support aux fromages en permettant leur aération

FIG.:1

2

1

FIG.:2

1

3

4

4

FIG.:3

1  2  2

4

4

4

5

3

4

4

5

3

6

5

6

FIG.:4

2

5

2

5

3

6

2

2

1

1

4

3

FIG.:5

4